# EUROPEAN PATENT APPLICATION

(11) **EP 4 657 841 A1**
(43) Date of publication of application: **03.12.2025**
(21) Application number: 25179796.5
(22) Date of filing: 30.05.2025
(51) Int. Cl.: H04N 1/00, B41J 29/38, H04N 1/42, B65H 83/00, B65H 9/00, B41J 29/387

(54) **LIQUID EJECTION APPARATUS AND CONTROL METHOD OF LIQUID EJECTION APPARATUS**

(30) Priority: 31.05.2024 JP 2024089202
(71) Applicant: CANON KABUSHIKI KAISHA, Tokyo 146-8501 (JP)
(72) Inventor: SUZUKI, Yumi, Tokyo,, 146-8501 (JP); KIUCHI, Takahiro, Tokyo,, 146-8501 (JP); FUKUDA, Toshiki, Tokyo,, 146-8501 (JP); KAWANISHI, Masahiro, Tokyo,, 146-8501 (JP); SHINOHARA, Shimpei, Tokyo,, 146-8501 (JP); IINO, Yusuke, Tokyo,, 146-8501 (JP); TAKENAGA, Ken, Tokyo,, 146-8501 (JP)
(74) Representative: TBK

(57) **Abstract**

Provided are a liquid ejection apparatus and a control method of the liquid ejection apparatus that can suppress a power consumption without impairing operational feeling. To this end, a tilt correction operation performed by abutting a printing medium onto a conveyance roller 2 in a printing unit 51 and an operation by a reading unit 52 are exclusively controlled.

## Description

### BACKGROUND

### Field

The present disclosure relates to a liquid ejection apparatus and a control method of the liquid ejection apparatus.

### Description of the Related Art

It is common for a liquid ejection apparatus to include multiple power consumption units such as a motor and a printing head that are supplied with power from a single electric power source. On the other hand, there is demand to reduce an electric power source capacity to avoid increase in size of the apparatus or from the perspective of environmental consideration. Therefore, the power consumption units need to be controlled to suppress peak power, which is a total amount of the power consumption of the power consumption units.

Japanese Patent Laid-Open No. H04-068862 discloses a control apparatus including a reading unit and a printing unit that does not perform a reading operation and a printing operation concurrently but performs the reading operation and the printing operation sequentially to suppress the total power consumption.

However, in a case where the reading operation and the printing operation are performed not concurrently but sequentially as described in Japanese Patent Laid-Open No. H04-068862, it requires time more than a case of a parallel operation of the reading operation and the printing operation, and there is a possibility that operational feeling of the user is impaired.

### SUMMARY

Therefore, the present disclosure provides a liquid ejection apparatus and a control method of the liquid ejection apparatus that can suppress the power consumption without impairing operational feeling of a user.

The present disclosure in its first aspect provides a liquid ejection apparatus as in claims 1 to 8.

The present disclosure in its second aspect provides a method for controlling liquid ejection apparatus as in claim 9.

According to the present disclosure, it is possible to provide a liquid ejection apparatus and a control method of the liquid ejection apparatus that can suppress the power consumption without impairing operational feeling of a user.

Further features of the present disclosure will become apparent from the following description of exemplary embodiments with reference to the attached drawings.

### BRIEF DESCRIPTION OF THE DRAWINGS

Fig. 1A and Fig. 1B are diagrams illustrating a liquid ejection apparatus;
Fig. 2 is a block diagram illustrating a control unit of a print system;
Fig. 3 is a cross-sectional view of the liquid ejection apparatus;
Fig. 4A, Fig. 4B, Fig. 4C, and Fig. 4D are cross-sectional views illustrating a conveyance unit of a printing medium in the liquid ejection apparatus;
Fig. 5A and Fig. 5B are diagrams illustrating a flatbed scanner that performs a reading operation;
Fig. 6A, Fig. 6B, Fig. 6C, and Fig. 6D are cross-sectional view illustrating a medium conveyance path in an ADF scanner unit;
Fig. 7 is a graph illustrating a relationship between a current and a torque in a motor;
Fig. 8 is a graph illustrating a power consumption and a total power consumption;
Fig. 9 is a flowchart illustrating document reading processing;
Fig. 10 is a flowchart illustrating double-side printing processing; and
Fig. 11 is a flowchart illustrating front-and-back-inversion processing.

### DESCRIPTION OF THE EMBODIMENTS

Hereinafter, an embodiment of the present disclosure is described with reference to the drawings.

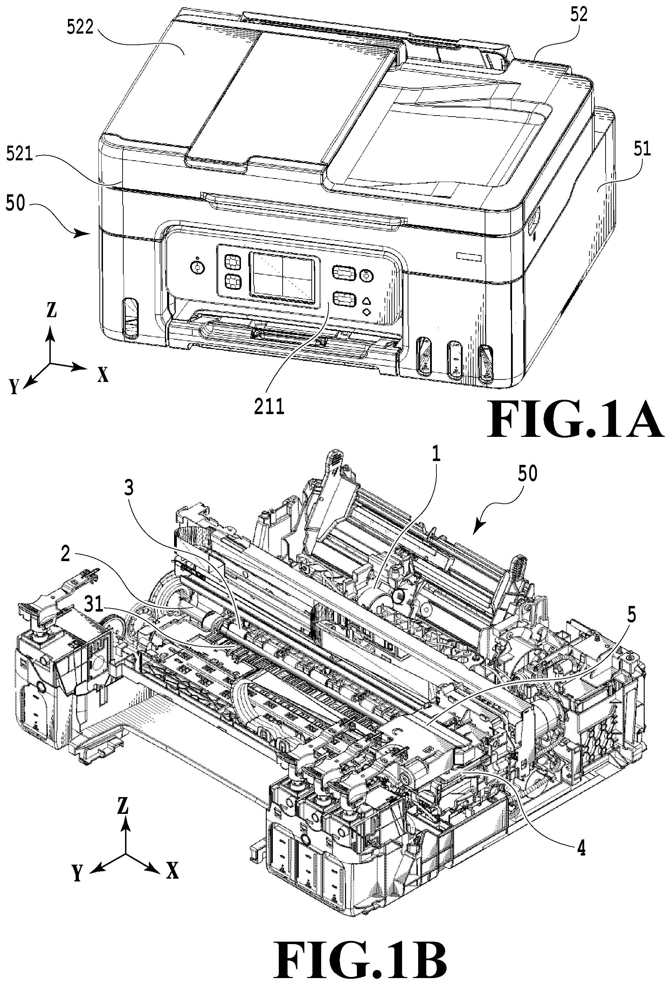

Fig. 1A is a perspective view illustrating an external view of a liquid ejection apparatus 50 to which the present disclosure is applicable, and Fig. 1B is a perspective view illustrating inside of the liquid ejection apparatus 50. The liquid ejection apparatus 50 includes a printing unit 51 that performs printing on a conveyed printing medium and a reading unit 52 that reads a reading medium (hereinafter, referred to as a document). Additionally, the liquid ejection apparatus 50 includes an operation display unit 211. The reading unit 52 includes a flatbed scanner unit 521 of a document-fixation-reading type that reads the document while fixing the document and an auto document feeder (ADF) scanner unit 522 of a document-conveyance-reading type that reads the document while conveying the document. That is, the liquid ejection apparatus 50 includes two types of medium reading units. The liquid ejection apparatus 50 performs a reading operation and a printing operation with the user operating the operation display unit 211.

The liquid ejection apparatus 50 includes a feeding roller 1 that feeds the printing medium, a conveyance roller 2 that conveys the printing medium, and a pinch roller 3 that is driven by the conveyance roller 2. The printing medium is conveyed onto a platen 31 while being pinched by the conveyance roller 2 and the pinch roller 3, and an image is printed by a printing head (an ejection head) 4. The printing head 4 is held by a carriage 5 and operated reciprocally in an X direction to perform printing by ejecting liquid onto an arbitrary position in a width direction (the X direction) of the printing medium.

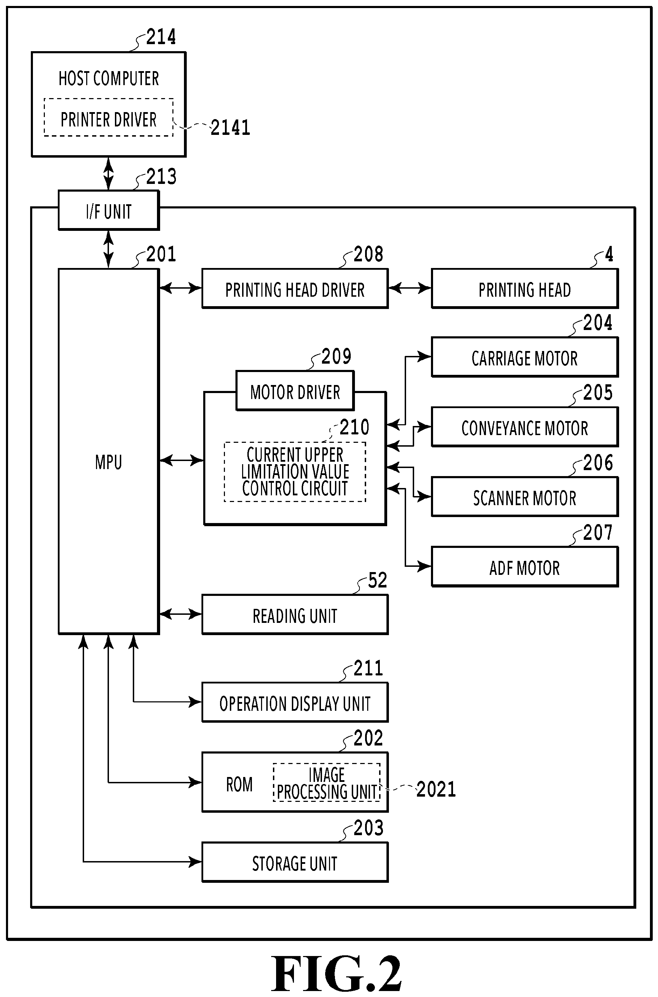

Fig. 2 is a block diagram illustrating a control unit of a print system in which a host computer 214 and the liquid ejection apparatus 50 are connected to each other. The liquid ejection apparatus 50 includes a printing head driver 208 connected to an MPU 201, a motor driver 209, the operation display unit 211, a ROM 202, and a RAM 203. The MPU 201 controls overall the liquid ejection apparatus 50 including an operation of each unit and data processing. The ROM 202 stores a program to be executed by the MPU 201 and various data. The RAM 203 temporarily stores processing data to be executed by the MPU 201 and data received from the host computer 214. The printing head driver 208 controls the printing head 4.

The motor driver 209 controls a carriage motor 204 that is a driving unit of the carriage 5, a conveyance motor 205, a scanner motor 206 that drives a not-illustrated reading unit, and an ADF motor 207 that drives a not-illustrated ADF-reading-document-conveyance unit. The carriage motor 204, the conveyance motor 205, the scanner motor 206, and the ADF motor 207 can be supplied with power from a common electric power source. The motor driver 209 includes a current upper limitation value control circuit 210 that defines an upper limitation value of current that flows through the connected motors 204 to 207. The current upper limitation value control circuit 210 can define multiple levels of current upper limitation values, and the multiple levels of set values are switchable based on an instruction from the MPU 201. The conveyance roller 2, a relay roller 20, and a discharge roller 18 are driven by the same conveyance motor 205, and the conveyance motor 205 is a DC motor. The motors 204 to 207 connected to the motor driver 209 are motors in which a current value is varied passively according to a load torque. Note that, although the DC motor is described as an example of the conveyance motor 205 in the present embodiment, the conveyance motor 205 may be an AC motor.

The host computer 214 is provided with a printer driver 2141 that puts together printing information such as a printing image and a printing image quality and communicates with the liquid ejection apparatus 50 in a case where the user provides a command to execute the printing operation. The MPU 201 executes transmission and reception of the printing image and the like to and from the host computer 214 via an I/F unit 213.

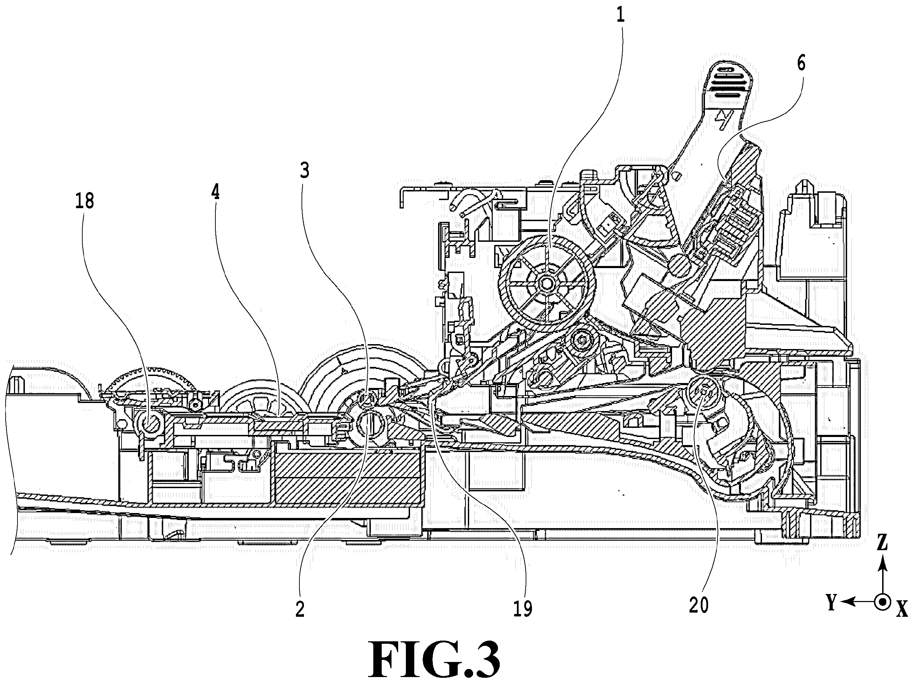

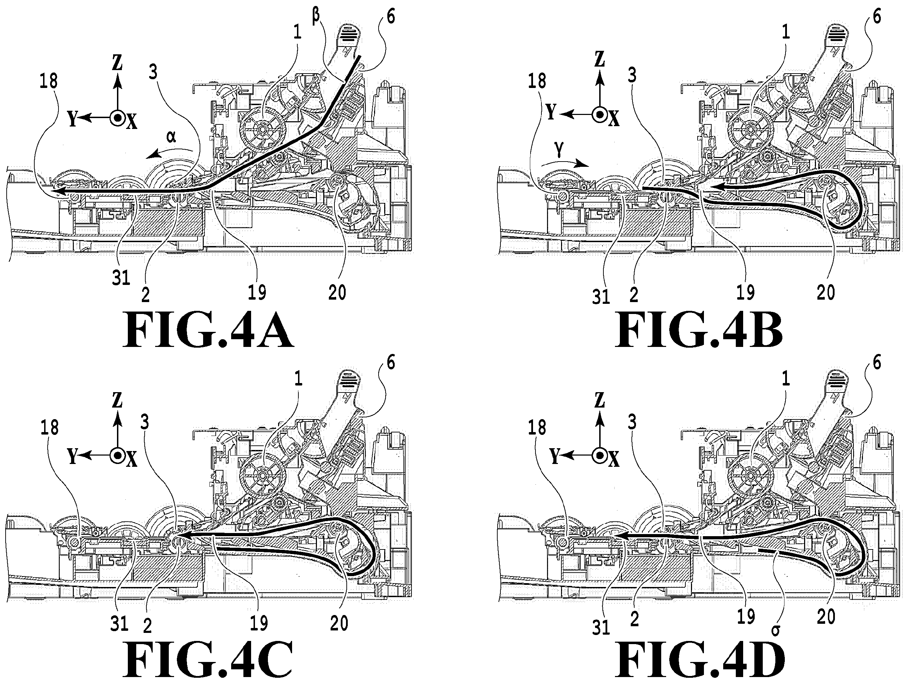

Fig. 3 is a cross-sectional view of the liquid ejection apparatus 50, and Figs. 4A to 4D are cross-sectional views illustrating a conveyance unit (a conveyance path) of the printing medium in the liquid ejection apparatus 50. The printing medium stacked on a feeding unit 6 is conveyed by the feeding roller 1 and the conveyance roller 2 to perform printing thereon at a position of the platen 31, and the printing medium is discharged by the discharge roller 18. A sheet sensor 19 is provided between the feeding roller 1 and the conveyance roller 2, and in a case where the sheet sensor 19 cannot detect a sheet although the feeding roller 1 is rotated, a notification about jam error and the like is made.

The printing medium is nipped by the conveyance roller (a main conveyance roller) 2 and the pinch roller 3, the conveyance roller 2 is rotated in a positive rotation direction (in Fig. 4A, an arrow α direction), and the printing medium is allowed to pass through a path indicated by an arrow β in Fig. 4A; therefore, printing is performed on a front side of the printing medium. In a case where the printing medium is not released from the conveyance roller 2 and the pinch roller 3 at the end of the printing on the front side of the printing medium, the printing medium is conveyed until it is released. After the printing on the front side ends, the discharge roller 18 is rotated inversely (in Fig. 4B, an arrow γ direction), and the printing medium is conveyed in an opposite direction (a - Y direction) of the conveyance direction in a case of the front side printing. Then, a rear end of the front side of the printing medium is nipped again by the conveyance roller 2 and the pinch roller 3. After the printing medium is nipped, the conveyance roller 2 is additionally rotated inversely (in Fig. 4A, an opposite direction of the arrow α) to allow the printing medium to pass through a U-turn path that is different from the path during the printing on the front side, and a leading end portion of a back side of the printing medium reaches the relay roller 20. The relay roller 20 shares a driving source with the conveyance roller 2; however, the relay roller 20 is rotated to convey the printing medium in a Y direction regardless of the rotation direction of the conveyance roller 2. Then, the printing medium is conveyed until the leading end portion of the printing medium reaches the sheet sensor 19 (see Fig. 4B).

Thereafter, the printing medium is conveyed by additionally rotating the conveyance roller 2 and the relay roller 20 inversely, and once a back side rear end portion of the printing medium is released from the conveyance roller 2, the relay roller 20 allows the leading end portion of the printing medium to pass through a position detected by the sheet sensor 19 to abut onto the conveyance roller 2 (see Fig. 4C). Thus, tilt of the printing medium is corrected by abutting the leading end portion of the printing medium onto the conveyance roller 2. Thereafter, printing is performed on the back side of the printing medium by rotating the conveyance roller 2 in the positive rotation direction such that the printing medium passes through a path passing through the conveyance roller 2 that is indicated by an arrow σ in Fig. 4D. With a series of operations as described above, it is possible to perform double-side printing on the printing medium by performing the feeding operation once from the feeding roller 1 (see Fig. 4D).

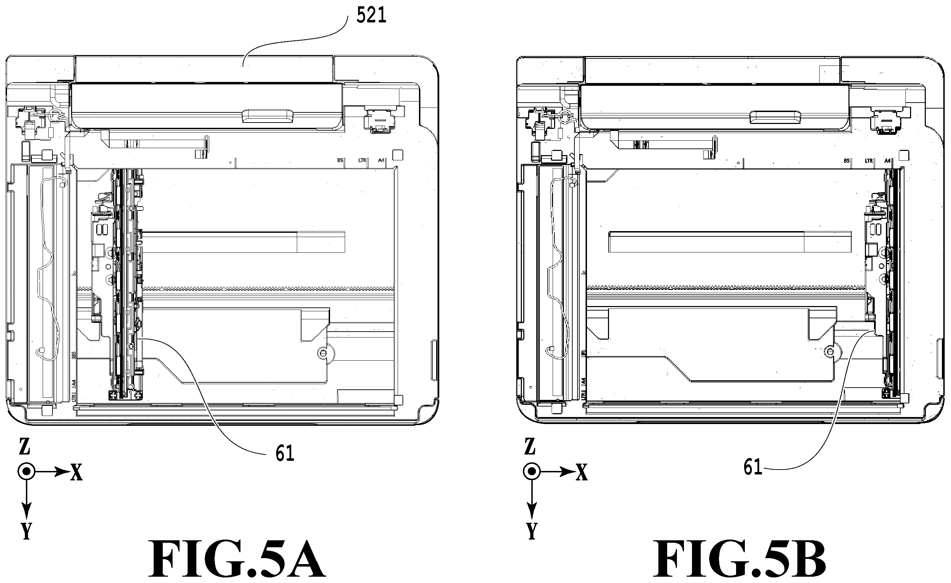

Figs. 5A and 5B are diagrams illustrating the flatbed scanner 521 that performs the reading operation in the liquid ejection apparatus 50. In the reading operation, a reading unit 61 reads the image information of the document by starting moving in the X direction by the scanner motor 206 (see Fig. 2) as illustrated in Fig. 5A and moving to an end portion as illustrated in Fig. 5B.

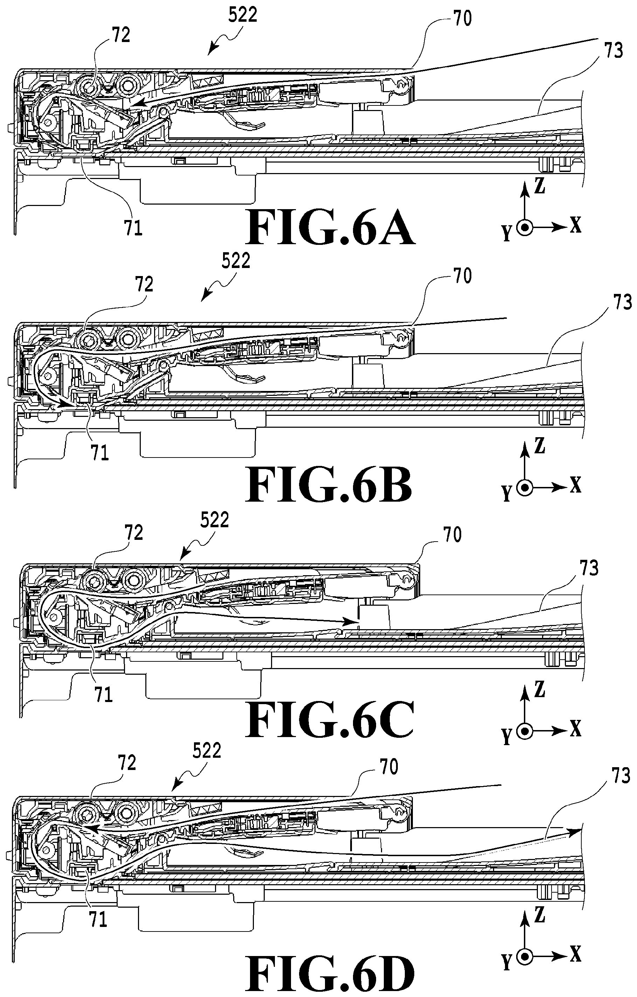

Figs. 6A to 6D are cross-sectional views illustrating a medium conveyance path in the ADF scanner unit 522 of the liquid ejection apparatus 50. In the reading operation, the document is fed from a reading and feeding unit 70 through a path indicated by an arrow in Fig. 6A and is conveyed until reaching a reading unit 71 indicated by an arrow in Fig. 6B by a reading and feeding roller 72. Thereafter, as indicated by an arrow in Fig. 6C, an image on the document is read with the document passing through the reading unit 71. In a case where multiple documents are stacked on the reading and feeding unit 70, as illustrated in Fig. 6D, a subsequent document is fed before a preceding document passes through the reading unit 71 and is stacked on a reading paper discharging unit 73.

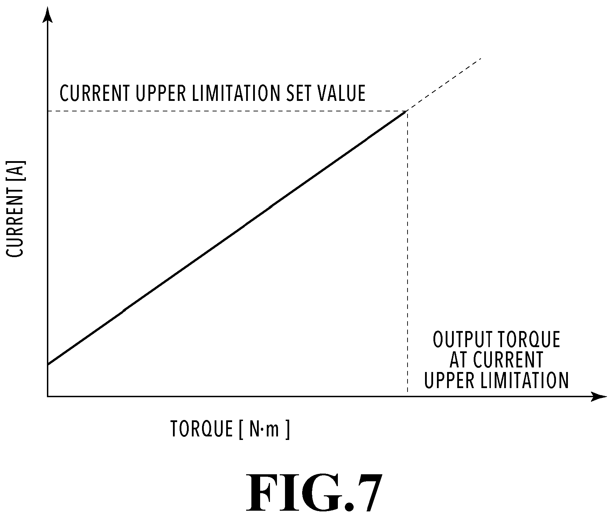

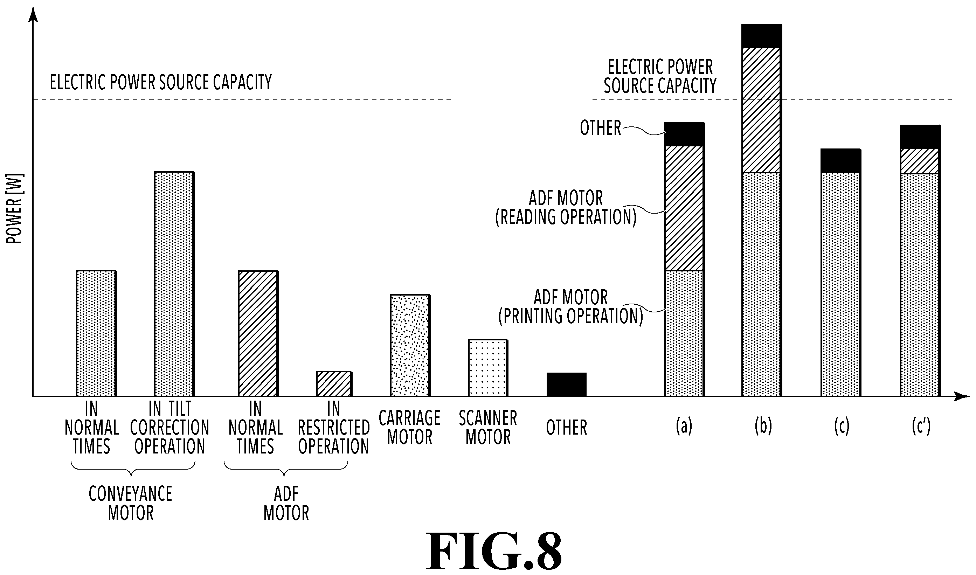

Fig. 7 is a graph illustrating a relationship between a current [A] and a torque [N m] in the motor used in the liquid ejection apparatus 50. Fig. 8 is a graph illustrating a power consumption of the conveyance motor 205, the carriage motor 204, the scanner motor 206, the ADF motor 207, and another power consumption unit and a total power consumption in a case where the multiple motors are driven concurrently.

In Fig. 8, (a) indicates a case other than the tilt correction during the printing operation conveyance, (b) indicates the tilt correction during the printing operation conveyance (with no exclusive processing), and (c) indicates the tilt correction during the printing operation (with exclusive processing). In the liquid ejection apparatus 50, in order to respond a request of low cost and high stopping accuracy, the DC motor is adopted for each of the conveyance motor 205, the carriage motor 204, the scanner motor 206, and the ADF motor 207. As illustrated in Fig. 7, the DC motor has a substantially linear relationship between the torque and the current value. That is, in a case where a great torque is generated, the current value also has a great value accordingly. Since the power consumption of the motor is proportional to the square of the current flowing through the motor in this relationship, great power is consumed in a case where great current flows. Fig. 8 illustrates the power of the conveyance motor 205 at normal times and in the tilt correction operation.

In a case where an operation to correct the tilt during the conveyance of the printing medium is performed in the printing operation, a great torque is required to rotate the conveyance roller 2. Therefore, a great torque is required for the conveyance motor 205 to drive the conveyance roller 2. In a normal operation, as illustrated in (a) in Fig. 8, even in a case where the printing operation and the reading operation are performed concurrently, the sum of the power consumption is equal to or smaller than an electric power source capacity. However, as illustrated in (b) in Fig. 8, in a case where the operation to correct the tilt of the printing medium is performed, the torque required for the conveyance motor 205 is great. In this case, in a case where the power consumption of the conveyance motor 205 is increased and thus the sum of the power consumption is increased, there is a possibility that output of the electric power source is stopped due to the power shortage because the power consumption exceeds the electric power source capacity.

To deal with this, in the present embodiment, for example, in a case where a predetermined operation with a great power consumption such as the operation to correct the tilt is performed, the printing unit 51 and the reading unit 52 are exclusively controlled. In an example illustrated in (c) in Fig. 8, a case where the power is allocated to the printing operation by limiting the reading operation in a case where a predetermined operation with a great power consumption is performed in the printing operation is illustrated. Thus, with the exclusive control of the printing unit 51 and the reading unit 52, it is possible to suppress the sum of the power consumption to be equal to or smaller than the electric power source capacity and to allocate the power to each operation sufficiently.

Here, referring back to Fig. 4 again. In the liquid ejection apparatus 50, the double-side conveyance is performed by the operations as illustrated in Figs. 4A to 4D. In a case where the tilt correction is performed by abutting the printing medium leading end onto the conveyance roller 2 as illustrated in Fig. 4C, the relay roller 20 operates so as to convey the printing medium further in the conveyance direction while abutting the leading end portion onto the conveyance roller 2. In the path near the relay roller 20 where the printing medium U-turns, a contact area between the printing medium and the conveyance path is increased, and a resistance (friction) that affects the printing medium is increased. Additionally, bending reaction force of the printing medium is increased.

In this state, a great torque is required to rotate the relay roller 20. Therefore, a great torque is required for the conveyance motor 205 to drive the conveyance roller 2 and the relay roller 20 concurrently. In a case where the conveyance motor 205 cannot generate a sufficient torque in this operation, the tilt correction of the printing medium is insufficient, and printing is performed on the back side while the printing medium is tilted, which is unfavorable. To deal with this, in the operation during the tilt correction illustrated in Fig. 4C, the exclusive control of the printing unit 51 and the reading unit 52 illustrated in (c) in Fig. 8 is performed to restrict the operation of the reading unit 52, and the power is allocated to the conveyance motor 205. Additionally, as illustrated in (c') in Fig. 8, the reading unit 52 may be restricted to operate with suppressed power consumption, and the power consumption of the ADF motor may be suppressed to be lower than normal times to allocate the power to the conveyance motor 205. After the operation of the printing unit 51 to perform the tilt correction ends, the exclusive control is cancelled, and the parallel operation of the printing unit 51 and the reading unit 52 is restarted.

Note that, although a case where the reading operation is restricted while the printing unit 51 performs the tilt correction is described above, it may be opposite. For example, in a case where the command of double-side printing is inputted in a case where the reading operation is already started, the printing operation may be restarted after waiting the completion of the reading operation of one page. Thus, it is possible to exclusively control the operation with a great power consumption by the printing unit 51 and the reading operation, allocate the power to each operation sufficiently, and perform the reading operation and the printing operation as the parallel operation. Therefore, there is no possibility of impairing operational feeling.

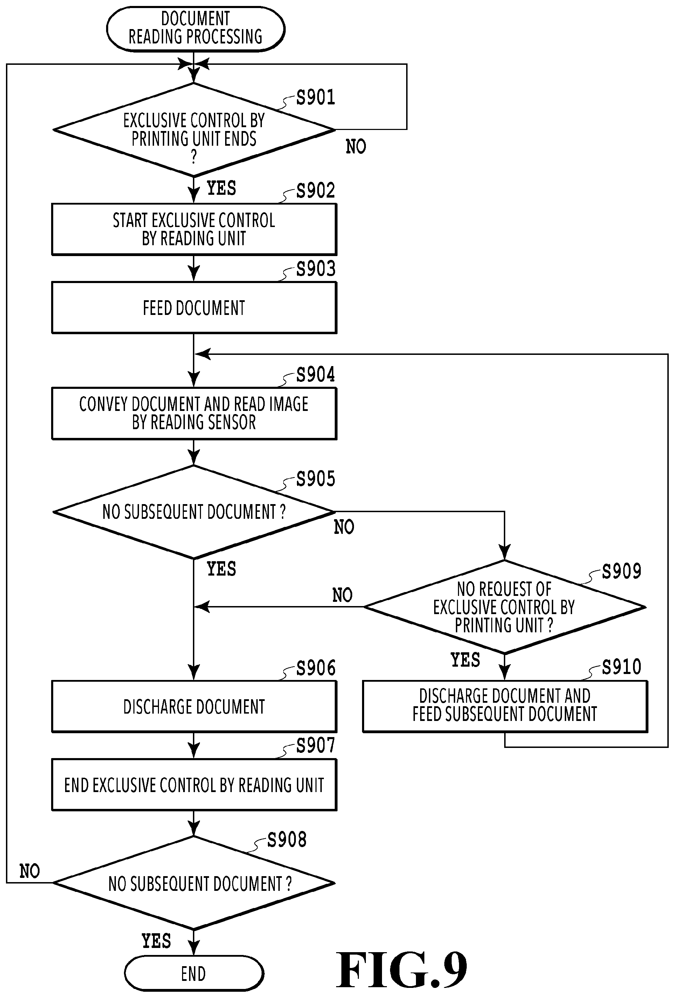

Fig. 9 is a flowchart illustrating document reading processing in the present embodiment. As described above, in the present embodiment, the operation with a great power consumption by the printing unit 51 and the reading unit 52 is the exclusively controlled while operating the printing unit 51 and the reading unit 52 in parallel. Fig. 9 describes the control (the exclusive control) under which the operation with a great power consumption by the printing unit 51 is not performed in a period in which the ADF scanner unit 522 operates. Hereinafter, the document reading processing in the present embodiment is described with reference to the flowchart in Fig. 9. A series of processing illustrated in Fig. 9 is performed with the MPU 201 of the liquid ejection apparatus 50 deploying a program code stored in the ROM 202 to the RAM 203 to execute. Alternatively, a part of or all the functions of the steps in Fig. 9 may be implemented by hardware such as an ASIC or an electronic circuit. Note that, a sign "S" in description of each processing means a step in the flowchart.

Once the document reading processing is started, in S901, the MPU 201 determines whether the exclusive control of the printing unit 51 ends. The exclusive control of the printing unit 51 herein is, as described above, restricting the operation of the reading unit 52 including the ADF scanner unit 522 in a case where the operation with a great power consumption is temporarily performed by the printing unit 51. For example, a flag indicating whether it is under the exclusive control may be used for "start" and "end" of the exclusive control. While the printing unit 51 is exclusively controlled, the MPU 201 repeats the processing in S901. During this process, the MPU 201 performs the operation with a great power consumption in the printing unit 51. Once the exclusive control of the printing unit 51 ends, that is, once the operation with a great power consumption by the printing unit 51 ends (S901: Yes), the MPU 201 allows the process to proceed to S902.

In S902, the MPU 201 starts the exclusive control of the reading unit 52. The exclusive control of the reading unit 52 herein is control that is paired with the exclusive control of the printing unit 51 described above and is control under which the operation of the printing unit 51 is restricted while operating the reading unit 52.

In S903, the MPU 201 feeds one of the documents stacked on the reading and feeding unit 70 to the ADF scanner unit 522 as illustrated in Fig. 7A. In S904, the MPU 201 conveys the document fed in S903 through the document conveyance path of the ADF scanner unit 522 as illustrated in Figs. 6B and 6C. Then, the MPU 201 reads the document image with the document passing above a reading sensor 61. In S905, the MPU 201 determines whether the subsequent document is stacked on the reading and feeding unit 70. As a method of confirming whether the document is stacked, for example, a not-illustrated sensor mounted in the reading and feeding unit 70 may be used. If the subsequent document is stacked (S905: No), the MPU 201 allows the process to proceed to S909. If no subsequent document is stacked (S905: Yes), that is, all the stacked documents are read, the MPU 201 allows the process to proceed to S906.

In a case where the process proceeds to S909, the MPU 201 determines whether there is a request of the exclusive control of the printing unit 51. The request of the exclusive control of the printing unit 51 herein is a request that is issued in a case where the printing unit 51 temporarily performs the operation with a great power consumption (the tilt correction). If there is the request of the exclusive control of the printing unit 51, (S909: No), the MPU 201 allows the process to proceed to S906. If there is no request of the exclusive control of the printing unit 51 (S909: Yes), the MPU 201 allows the process to proceed to S910.

In S910, as illustrated in Fig. 6D, the MPU 201 discharges the document read in S904 from the ADF scanner unit 522 to the reading paper discharging unit 73. Additionally, the MPU 201 concurrently feeds one of the documents stacked on the reading and feeding unit 70 to the ADF scanner unit 522. Thus, it is possible to reduce the reading time of multiple documents by concurrently performing the discharging operation of the document and the feeding operation of the subsequent document. Thereafter, the MPU 201 allows the process to return to S904 and reads the image of the subsequent document. Therefore, in a case where multiple documents are stacked on the reading and feeding unit 70 and there is no request of the exclusive control of the printing unit 51, the MPU 201 repeats S904 to S910 and sequentially reads the images of the multiple documents continuously.

In S906, the MPU 201 discharges the document read in S904 to the reading paper discharging unit 73. In the paper discharging in this process, unlike S910, the feeding of the subsequent document is not performed.

In S907, the MPU 201 ends the exclusive control of the reading unit 52. In a case where the exclusive control of the reading unit 52 restricts the operation of the printing unit 51, the MPU 201 restarts the operation of the printing unit 51 and exclusively controls the printing unit 51 (details are described later).

In S908, as with S905, the MPU 201 determines whether the subsequent document is stacked on the reading and feeding unit 70. If the subsequent document is stacked (S908: No), the MPU 201 returns to S901 and repeats the processing, and the MPU 201 restricts the operation of the reading unit 52 in S901 while the printing unit 51 is exclusively controlled.

On the other hand, in S908, if no subsequent document is stacked (S908: Yes), that is, if all the stacked documents are read, the MPU 201 ends the document reading processing.

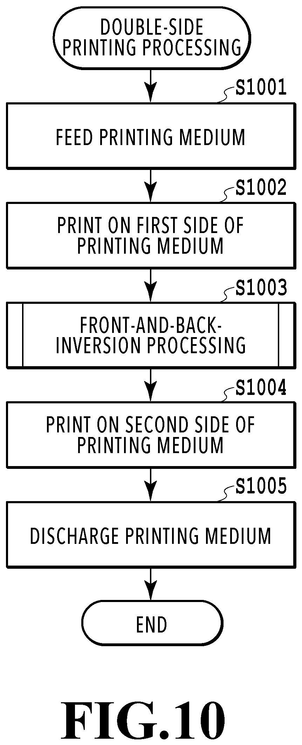

Fig. 10 is a flowchart illustrating the double-side printing processing to perform the printing operation on the double-sides on the front and back of the printing medium by the printing unit 51. Hereinafter, the double-side printing processing in the present embodiment is described with reference to the flowchart in Fig. 10. A series of processing illustrated in Fig. 10 is performed with the MPU 201 of the liquid ejection apparatus 50 deploying the program code stored in the ROM 202 to the RAM 203 to execute. Alternatively, a part of or all the functions of the steps in Fig. 10 may be implemented with hardware such as an ASIC or an electronic circuit. Note that, a sign "S" in description of each processing means a step in the flowchart.

In S1001, the MPU 201 feeds one of the printing media stacked on the feeding unit 6 to the platen 31 through the path in Fig. 4A to perform the front side printing. In the feeding, the MPU 201 abuts the leading end of the printing medium onto the conveyance roller 2 to perform the tilt correction. In this case, in the front side printing, the torque required for the conveyance motor 205, that is, the power consumption of the conveyance motor 205 is smaller than that in the tilt correction during the back side printing after the inversion between the front and back described later, it is possible to perform the parallel operation with the reading unit 52. Therefore, in the front side printing, the MPU 201 does not exclusively control the printing unit 51 and the reading unit 52.

In S1002, the MPU 201 prints an image on the front side (hereinafter, referred to as a first side) of the printing medium. The MPU 201 conveys the printing medium by the conveyance roller 2 on the platen 31 and moves the carriage 5 in the X direction in Fig. 4A to eject the ink from the printing head 4.

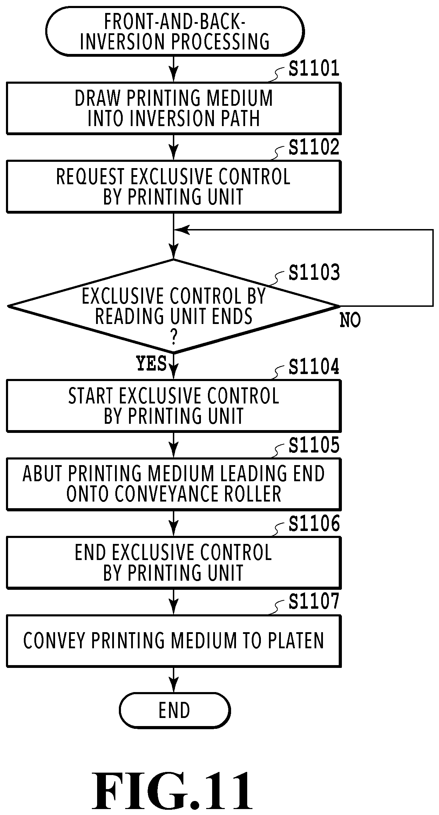

In S1003, the MPU 201 performs front-and-back-inversion processing to invert the front and back of the printing medium as illustrated in Figs. 4B and 4C. Details of the front-and-back-inversion processing in S1003 are described later with reference to Fig. 11. In S1004, the MPU 201 prints an image on the back side (hereinafter, referred to as a second side) of the printing medium. On the path illustrated in Fig. 4D, the printing operation is performed as with S1002. In S1105, the MPU 201 discharges the printing medium on which the printing on the front and back double-sides is completed to the printing paper discharging unit and ends the double-side printing processing.

Fig. 11 is a flowchart illustrating the front-and-back-inversion processing in the present embodiment. The present processing is the processing in S1003 of the flowchart in Fig. 10. A sign "S" in description of each processing means a step in the flowchart.

Once the front-and-back-inversion processing is started, in S1101, the MPU 201 draws the printing medium into the inversion path illustrated in Fig. 4B. The MPU 201 draws the printing medium into the inversion path by rotating the conveyance roller 2 in the inverse rotation direction (rotating in an opposite direction of the arrow α in Fig. 4A). Then, before the leading end of the inverted printing medium reaches the sheet sensor 19, the MPU 201 stops the rotation of the conveyance roller 2 in the position illustrated in Fig. 4B.

In S1102, the MPU 201 requests the exclusive control of the printing unit 51. As described above, in the tilt correction operation during the printing on the second side after the inversion, the power consumption in the conveyance motor 205 is temporarily increased. Therefore, in order to supply the conveyance motor 205 with sufficient power, the MPU 201 requests the restriction of the operation of the reading unit 52 before the tilt correction operation is performed.

In S1103, the MPU 201 determines whether the exclusive control of the reading unit 52 ends. While the reading unit 52 is exclusively controlled (S1103: No), the MPU 201 repeatedly executes the processing in S1103. In this process, in response to the request of the exclusive control of the printing unit 51, as illustrated in S907, the MPU 201 ends the exclusive control of the reading unit 52 at a time point where the discharging of the document currently being read ends. Once the exclusive control of the reading unit 52 ends (S1103: Yes), the MPU 201 allows the process to proceed to S1104.

In S1104, the MPU 201 starts the exclusive control of the printing unit 51. With the exclusive control of the printing unit 51, it is possible to restrict the operation of the reading unit 52 and to sufficiently allocate the power to the operation of the printing unit 51. In S1105, the MPU 201 rotates the conveyance roller 2 in the inverse rotation direction (rotates in the opposite direction of the arrow α in Fig. 4A) and thereafter rotates the relay roller 20 in the positive rotation direction to Fig. 4C to abut the leading end of the printing medium onto the conveyance roller 2 to perform the tilt correction of the printing medium. In this process, as described above, a great torque is required for the conveyance motor 205. Therefore, the MPU 201 first allocates the sufficient power to the present operation by the exclusive control of the printing unit 51 and then performs the tilt correction.

In S1106, the MPU 201 ends the exclusive control of the printing unit 51. In a case where the operation of the reading unit 52 is restricted by the exclusive control of the printing unit 51, the MPU 201 restarts the operation of the reading unit 52 as illustrated in S902 in Fig. 9. In S1107, the MPU 201 rotates the conveyance roller 2 in the positive rotation direction (rotates in the arrow α direction in Fig. 4A) to convey the printing medium to the platen 31 as illustrated in Fig. 4D and ends the front-and-back-inversion processing.

Thus far, each processing illustrated in Figs. 9 to 11 is individually described assuming a case where a reading command and a printing command are inputted separately; however, a copying command may be inputted to the liquid ejection apparatus including the reading unit 52 and the printing unit 51 as described in the present embodiment. In this case, the MPU 201 prints the image read by the reading unit 52 by the printing unit 51. In this case, each processing illustrated in Figs. 9 to 11 may be performed in conjunction with each other. Hereinafter, a series of operations of a double-side copying operation to perform copying on the double-sides on the front and back of the printing medium from multiple documents in the present embodiment is described with reference to Figs. 9 to 11. The MPU 201 can perform the double-side copying operation with the user of the liquid ejection apparatus 50 stacking multiple documents on the reading and feeding unit 70 and stacking the printing medium on the feeding unit 6 and then operating the operation display unit 211.

In the double-side copying operation, first, the document reading operation by the ADF scanner unit 522 illustrated in Fig. 6 is started. Since the printing unit 51 is not exclusively controlled at the beginning of the double-side copying operation, the MPU 201 allows the process to proceed to S902 and the subsequent steps. In a case where it is possible to read the first document image in the processing until S904, the MPU 201 starts the double-side printing processing by the printing unit 51 illustrated in Fig. 10. While the document remains on the reading and feeding unit 70 and there is no request of the exclusive control of the printing unit 51, the MPU 201 repeatedly executes S904 to S910 and sequentially reads the images of the multiple documents.

Once the double-side printing operation in Fig. 10 is started, the MPU 201 performs the printing operation on the first side of the printing medium from S1001 to S1002. Then, after the printing medium is drawn into the inversion path in S1101 in Fig. 11, the MPU 201 requests the exclusive control of the printing unit 51 in S1102. In this process, in the document reading operation in Fig. 9, the MPU 201 allows the process to proceed to S906 based on the determination in S909 to stop the sequential reading of the document images and ends the exclusive control by the reading unit 52 in S907. Thus, in a case of performing the printing operation, it is possible to request the exclusive control of the printing unit 51 also during the reading operation, and along with this, the exclusive control of the reading unit 52 ends in a proper timing such as a time point where reading of one page is completed.

Once the exclusive control of the reading unit 52 ends, in the front-and-back-inversion processing in Fig. 11, the MPU 201 allows the process to proceed from S1103 to S1104 and starts the exclusive control of the printing unit 51. Then, in the document reading operation in Fig. 9, the MPU 201 waits for ending of the exclusive control in S901. Therefore, the MPU 201 can execute the tilt correction with a great power consumption in S1105 in Fig. 11 while restricting the operation of the reading unit 52. In S1106, once the exclusive control of the printing unit 51 ends, the MPU 201 allows the control in Fig. 9 to proceed to S902 and the subsequent steps and restarts the document reading processing. On the other hand, the MPU 201 allows the front-and-back-inversion processing in Fig. 11 to proceed. Once the front-and-back-inversion processing in Fig. 11 ends, the MPU 201 performs the printing operation on the second side of the printing medium in S1004 in Fig. 10.

The double-side printing operation in Fig. 10 is executed once for each printing medium (the two sides on the front and back) according to the progress of the reading operation of the multiple documents in Fig. 9. Once the reading of all the documents stacked on the reading and feeding unit 70 ends, the MPU 201 ends the document reading processing in Fig. 9. Once all the document images are printed on the printing media, the MPU 201 ends the double-side copying operation.

Note that, although the operation of the reading unit 52 is restricted during the exclusive control of the printing unit 51 in the present embodiment, "restrict" herein includes stopping the operation of the reading unit 52, operating the reading unit 52 with suppressed power consumption, and a combination thereof.

Thus, the exclusive control is performed on the tilt correction operation performed by abutting the printing medium onto the conveyance roller 2 in the printing unit 51 and the operation of the reading unit 52. Thus, it is possible to provide a liquid ejection apparatus and a control method of the liquid ejection apparatus that can suppress the power consumption without impairing operational feeling.

### (Other Embodiments)

Hereinafter, other embodiments of the present disclosure are described. Note that, since a basic configuration of the present embodiment is similar to that of the first embodiment, a characteristic configuration is described below.

In the above-described first embodiment, an example in which the exclusive control is performed on the document reading operation by the ADF scanner unit 522 and the tilt correction of the printing medium during the front-and-back-inversion operation of the printing unit 51 is described. However, the target of the exclusive control is not limited thereto. For example, the document reading operation by the flatbed scanner unit 521 may be the target of the exclusive control. Additionally, another operation by the printing unit 51 (not limited to the conveyance operation) may be the target of the exclusive control.

Additionally, in the first embodiment, a control example in a case where there is an operation with a great power consumption during the printing operation by the printing unit 51 and the exclusive control is performed with the reading unit 52 is described. However, it is not limited thereto, and the exclusive control may be performed with the printing unit 51 for an operation with a great power consumption by the reading unit 52 as the target. That is, in a case where either one of the printing unit and the reading unit performs a predetermined operation with a great power consumption, an operation of the other may be controlled to be restricted.

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

## Claims

1. A liquid ejection apparatus (50), comprising:
a printing unit (51) configured to print an image on a printing medium;
a reading unit (52) configured to read an image of a document; and
a control unit configured to control the printing unit (51) and the reading unit (52), **characterized in that**
in a period in which either one of the printing unit (51) and the reading unit (52) performs a predetermined operation with a great power consumption, the control unit restricts an operation by the other.

2. The liquid ejection apparatus (50) according to claim 1, **characterized in that**
the printing unit (51) includes an ejection head (4) configured to eject liquid and a conveyance unit configured to convey a printing medium on which an image is printed by the ejection head (4), and
the predetermined operation is a tilt correction operation in which printing on a first side of the printing medium is performed, the printing medium is inverted between front and back by the conveyance unit, and thereafter tilt of the printing medium is corrected before printing on a second side that is a back side of the first side.

3. The liquid ejection apparatus (50) according to claim 2, **characterized in that**
in a period in which the printing unit (51) performs the tilt correction operation, the control unit restricts an operation by the reading unit (52).

4. The liquid ejection apparatus (50) according to claim 3, **characterized in that**
the restriction of the operation by the reading unit (52) includes stopping the operation and the operation with a suppressed power consumption.

5. The liquid ejection apparatus (50) according to claim 2, **characterized in that**
the conveyance unit includes a conveyance roller (2) configured to convey the printing medium and a relay roller (20) configured to convey the printing medium after inversion between front and back, which are driven by the same motor (205), and
in the tilt correction operation, a leading end of the printing medium is abutted onto the conveyance roller (2) with the relay roller (20) conveying the printing medium.

6. The liquid ejection apparatus (50) according to claim 5, **characterized in that**
the motor (205) is an AC motor or a DC motor.

7. The liquid ejection apparatus (50) according to any one of claims 1 to 6,
**characterized in that**
the reading unit (52) is an ADF scanner (522) that can sequentially read a plurality of documents.

8. The liquid ejection apparatus (50) according to any one of claims 1 to 6,
**characterized in that**
the reading unit (52) is a flatbed scanner (521) configured to read a document while fixing the document.

9. A control method of the liquid ejection apparatus (50) including a printing unit (51) configured to print an image on a printing medium and a reading unit (52) configured to read an image on a document, **characterized in that**
in controlling of the printing unit (51) and the reading unit (52), in a period in which either one of the printing unit (51) and the reading unit (52) performs a predetermined operation with a great power consumption, an operation by the other is restricted.
